# EUROPÄISCHE PATENTANMELDUNG

(11) **EP 4 317 941 A1**
(43) Veröffentlichungstag der Anmeldung: **07.02.2024**
(21) Anmeldenummer: 22188386.1
(22) Anmeldetag: 02.08.2022
(51) Int. Cl.: G01N 17/00, E06B 9/24

(54) **PRÜFKAMMER UND VERFAHREN ZUR STEUERUNG**

(71) Anmelder: Weiss Technik GmbH, 35447 Reiskirchen (DE)
(72) Erfinder: Löffler, Marc, 72336 Balingen (DE); Nufer, Jürgen, 72469 Meßstetten (DE)
(74) Vertreter: advotec.

(57) **Zusammenfassung**

Die Erfindung betrifft eine Prüfkammer (10) zur Konditionierung von Luft, sowie ein Verfahren zu Steuerung einer Prüfkammer, insbesondere Klimakammer oder dergleichen, umfassend einen gegenüber einer Umgebung (13) durch Wände (12) begrenzten, mit einem Türelement (14) verschließbaren und temperaturisolierten Prüfraum (11) zur Aufnahme von Prüfgut, eine Steuervorrichtung zur Steuerung einer Funktion der Prüfkammer, und eine Temperiervorrichtung zur Temperierung des Prüfraums, wobei die Temperiervorrichtung eine Kühleinrichtung und eine Heizeinrichtung aufweist, wobei mittels der Temperiervorrichtung eine Temperatur in einem Temperaturbereich von -40 °C bis +180 °C innerhalb des Prüfraums ausbildbar ist, wobei der Prüfraum zumindest ein Fenster (15) aufweist, wobei das Fenster mit einer Abschirmvorrichtung der Prüfkammer ausgebildet ist, wobei die Steuervorrichtung dazu eingerichtet ist, die Abschirmvorrichtung entweder in einen ersten Betriebszustand oder in einen zweiten Betriebszustand zu bringen, wobei mittels der Abschirmvorrichtung ein Transmissionsgrad des Fensters in dem ersten Betriebszustand kleiner und/oder ein Absorptionsgrad des Fensters größer als in dem zweiten Betriebszustand ausbildbar ist.

## Beschreibung

Die Erfindung betrifft eine Prüfkammer zur Konditionierung von Luft, insbesondere Klimakammer oder dergleichen, sowie ein Verfahren zur Steuerung einer Prüfkammer, umfassend einen gegenüber einer Umgebung durch Wände begrenzten, mit einem Türelement verschließbaren und temperaturisolierten Prüfraum zur Aufnahme von Prüfgut, eine Steuervorrichtung zur Steuerung einer Funktion der Prüfkammer, und eine Temperiervorrichtung zur Temperierung des Prüfraums, wobei die Temperiervorrichtung eine Kühleinrichtung und eine Heizeinrichtung aufweist, wobei mittels der Temperiervorrichtung eine Temperatur in einem Temperaturbereich von -40 °C bis +180 °C, vorzugsweise -80 °C bis +180 °C, innerhalb des Prüfraums ausbildbar ist, wobei der Prüfraum zumindest ein Fenster aufweist.

Prüfkammern werden zur Überprüfung von physikalischen und/oder chemischen Eigenschaften von Gegenständen, insbesondere Vorrichtungen, eingesetzt. So sind Temperaturprüfschränke oder Klimaprüfschränke bekannt, innerhalb derer Temperaturen in einem Bereich von -40 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Derartige Prüfkammern sind regelmäßig als ein mobiles Gerät ausgebildet, welches lediglich über erforderliche Versorgungsleitungen mit einem Gebäude verbunden ist und alle zur Temperierung des Prüfguts erforderlichen Baugruppen umfasst. Eine Temperierung eines des zu prüfenden Prüfguts aufnehmenden Prüfraums erfolgt regelmäßig in einem Umluftkanal innerhalb des Prüfraums, in dem Wärmetauscher zur Erwärmung oder Kühlung der den Umluftkanal bzw. den Prüfraum durchströmenden Luft angeordnet sind. Sofern besondere Klimabedingungen bzw. eine definierte relative Luftfeuchte eingestellt werden soll, kann die Prüfkammer auch eine Vorrichtung speziell zur Ent- oder Befeuchtung der im Prüfraum befindlichen Luft aufweisen.

Bei einem Temperaturwechsel bzw. Klimawechsel innerhalb des Prüfraums kann Wasser an dem Prüfgut kondensieren, was je nach Prüfablauf auch erwünscht sein kann. Bei derartigen Prüfungen ist es häufig wichtig, dass eine gleichmäßige Betauung einer Oberfläche des Prüfguts sowie auch eine entsprechend gleichmäßige Temperierung dieser Oberfläche erfolgt. Eine Konstanz von Temperatur und Luftfeuchte in dem Prüfraum, bzw. eine entsprechende homogene Verteilung, ist daher für eine Qualität einer Prüfung von großer Bedeutung. Wie sich jedoch gezeigt hat, kann während eines Prüfintervalls eine Temperatur in dem Prüfraum in unerwünschter Weise variieren bzw. es können sich im Prüfraum und an dem Prüfgut räumliche Temperaturunterschiede ausbilden. Dies kann dazu führen, dass es beispielsweise nur zu einer teilweisen Betauung einer Oberfläche des Prüfguts kommt. Unter anderem können diese unerwünschten Effekte dadurch hervorgerufen werden, dass beispielsweise Strahlungsenergie durch ein Fenster des Prüfraums auf das Prüfgut gelangt. Je nach Anordnung der Prüfkammer in einem Raum eines Gebäudes kann beispielsweise Sonnenlicht oder auch Wärmestrahlung anderer, im Gebäude befindlicher Maschinen und Einrichtungen durch das Fenster auf das Prüfgut fallen. Darüber hinaus kann das Prüfgut selbst, je nach Art des Prüfguts, Strahlungsenergie emittieren, die auf umgekehrtem Wege aus dem Prüfraum austreten kann. Gleichwohl ist es wünschenswert, dass der Prüfraum ein Fenster aufweist, damit von einer Bedienperson ein Zustand der Prüfkammer bzw. des Prüfguts auf einfache Weise überwacht werden kann.

Der vorliegenden Erfindung liegt daher die Aufgabe zugrunde, eine Prüfkammer und ein Verfahren zur Steuerung einer Prüfkammer vorzuschlagen, mit der bzw. dem Temperaturbedingungen und Klimabedingungen im Prüfraum besonders genau und konstant ausgebildet werden können.

Diese Aufgabe wird durch eine Prüfkammer mit den Merkmalen des Anspruchs 1 und ein Verfahren mit den Merkmalen des Anspruchs 10 gelöst.

Die erfindungsgemäße Prüfkammer zur Konditionierung von Luft, insbesondere Klimakammer oder dergleichen, umfasst einen gegenüber einer Umgebung durch Wände begrenzten, mit einem Türelement verschließbaren und temperaturisolierten Prüfraum zur Aufnahme von Prüfgut, eine Steuervorrichtung zur Steuerung einer Funktion der Prüfkammer und eine Temperiervorrichtung zur Temperierung des Prüfraums, wobei die Temperiervorrichtung eine Kühleinrichtung und eine Heizeinrichtung aufweist, wobei mittels der Temperiervorrichtung eine Temperatur in einem Temperaturbereich von -40 °C bis +180 °C, vorzugsweise -80 °C bis +180 °C, innerhalb des Prüfraums ausbildbar ist, wobei der Prüfraum zumindest ein Fenster aufweist, wobei das Fenster mit einer Abschirmvorrichtung der Prüfkammer ausgebildet ist, wobei die Steuervorrichtung dazu eingerichtet ist, die Abschirmvorrichtung entweder in einem ersten Betriebszustand oder in einem zweiten Betriebszustand zu bringen, wobei mittels der Abschirmvorrichtung ein Transmissionsgrad des Fensters in dem ersten Betriebszustand kleiner und/oder ein Absorptionsgrad des Fensters größer als in den zweiten Betriebszustand ausbildbar ist.

Bei der erfindungsgemäßen Prüfkammer wird es durch die temperaturisolierten Wände möglich, einen Wärmeaustausch mit der Umgebung des Prüfraums weitestgehend zu vermeiden. Das Türelement, welches zum Verschließen einer Öffnung des Prüfraums dient, ist dabei ebenfalls temperaturisoliert. Über das Türelement kann Prüfgut in den Prüfraum eingebracht bzw. aus dem Prüfraum entnommen werden. Das Türelement kann den Prüfraum dabei dicht verschließen. Die Steuervorrichtung dient zur Steuerung einer Funktion der Prüfkammer, beispielsweise zur Steuerung der Temperiervorrichtung, sodass mittels der Steuervorrichtung ein Prüfintervall mit einem definierten Prüfablauf automatisiert durch Kühlen und/oder Heizen der Luft in dem Prüfraum, durchgeführt werden kann. Die Steuervorrichtung kann beispielsweise eine speicherprogrammierbare Steuerung oder ein Computer sein. Weiter weist der Prüfraum zumindest ein Fenster auf, über das eine Bedienperson einen Inhalt des Prüfraums kontrollieren kann.

Erfindungsgemäß ist es nun vorgesehen, dass das Fenster mit einer Abschirmvorrichtung der Prüfkammer ausgebildet ist. Die Abschirmvorrichtung dient dazu einen Durchtritt von elektromagnetischer Strahlung und/oder Wärmestrahlung zumindest teilweise, vorzugsweise vollständig, zu verhindern. Dadurch wird es möglich, das Prüfgut vor Einflüssen einer Umgebung, beispielsweise Sonnenlichteinfall oder Wärmestrahlung noch besser abzuschirmen, sodass konstantere Prüfbedingungen ausgebildet und damit noch genauere Prüfungen durchgeführt werden können. Dadurch, dass die Abschirmvorrichtung in einen ersten Betriebszustand, der die Abschirmung bewirkt, oder wahlweise in einen zweiten Betriebszustand bringbar ist, wird es möglich, den Prüfraum nicht dauerhaft so abzuschirmen, dass keine Kontrolle des Prüfraums möglich wäre. Diese kann dann noch während des zweiten Betriebszustands durchgeführt werden. Dabei unterscheidet sich der erste Betriebszustand von dem zweiten Betriebszustand darin, dass in dem ersten Betriebszustand ein Transmissionsgrad des Fensters kleiner und/oder ein Absorptionsgrad des Fensters größer als in dem zweiten Betriebszustand ist. In dem zweiten Betriebszustand der Abschirmvorrichtung wird folglich eine Kontrolle des Prüfraums ermöglicht, und in dem ersten Betriebszustand ist das Fenster so weit abgeschirmt, dass durch das Fenster eine Prüfbedingung nicht oder nur unwesentlich beeinflusst ist. Die Steuervorrichtung steuert dabei die Abschirmvorrichtung, wodurch eine kontrollierte Abschirmung des Prüfraums ermöglicht wird. Insgesamt ist es so auch möglich, Kälteenergie und/oder Wärmeenergie einzusparen und damit einen Leistungsverbrauch der Prüfkammer zu senken.

Mittels der Abschirmvorrichtung kann in dem ersten Betriebszustand elektromagnetische Strahlung, bevorzugt Wärmestrahlung, UV-Strahlung, sichtbares Licht und/oder IR-Strahlung, abschirmbar sein. Neben Wärmestrahlung kann auch, je nach Beschaffenheit des Prüfguts, ultraviolette Strahlung sowie sichtbares Licht und/oder Infrarotstrahlung eine Prüfung in erwünschter Weise beeinflussen. Die Abschirmvorrichtung kann daher so ausgebildet sein, dass auch diese Strahlung mittels der Abschirmvorrichtung in dem ersten Betriebszustand abgeschirmt wird und so nicht das Fenster passieren kann. In dem zweiten Betriebszustand kann dann diese Strahlung bzw. Anteile davon durch das Fenster auf das Prüfgut bzw. in den Prüfraum gelangen.

Folglich kann das Fenster in dem ersten Betriebszustand intransparent und in dem zweiten Betriebszustand transparent sein. So ist es auch für eine Bedienperson leicht möglich, einen Zustand der Abschirmvorrichtung bzw. den ersten Betriebszustand oder den zweiten Betriebszustand ohne Weiteres zu erkennen.

Die Abschirmvorrichtung kann eine Abschirmeinrichtung aufweisen, wobei die Abschirmeinrichtung aus einem Glas oder einer Folie mit thermochromen, elektrochromen und/oder photochromen Eigenschaften ausgebildet sein kann, wobei die Abschirmeinrichtung eine Fensterfläche des Fensters überdecken kann. Die Abschirmeinrichtung ist vorzugsweise so ausgebildet, dass die Fensterfläche des Fensters vollständig überdeckt ist. Prinzipiell wäre es aber auch möglich, nur eine teilweise Überdeckung der Fensterfläche des Fensters vorzusehen und einen Bereich der Fensterfläche auszulassen, an dem keine Abschirmvorrichtung an dem Fenster ausgebildet bzw. angeordnet ist. Die Abschirmeinrichtung kann besonders einfach aus einem Glas oder einer Folie ausgebildet sein, das bzw. die mit thermochromen, elektrochromen und/oder photochromen Eigenschaften ausgebildet ist. Prinzipiell ist es daher auch möglich, dass die Abschirmeinrichtung mit mehreren Gläsern oder Folien ausgebildet ist, die je nach Bedarf, unterschiedliche Eigenschaften und damit Wirkungen einer Abschirmung von bestimmter Strahlung, aufweisen können. Unerwünschte physikalische Einflüsse können so bedarfsgerecht abgeschirmt werden. Weiter wäre es aber auch möglich, eine Wirkung einer Abschirmung durch einen Prüfablauf unmittelbar zu beeinflussen, beispielsweise durch eine Temperatur im Prüfraum.

Das Glas oder die Folie kann mit Flüssigkristalltechnik ausgebildet sein und elektrisch in den ersten Betriebszustand oder in den zweiten Betriebszustand schaltbar sein. Dabei kann vorgesehen sein, dass das Glas oder die Folie auf einer Scheibe des Fensters, vorzugsweise auf einer einer Umgebung zugewandten Scheibe, aufgebracht ist. Beispielsweise kann dann der erste und der zweite Betriebszustand durch eine Umpolung einer Spannung einfach hergestellt werden. Auf das Fenster auftreffende Wärmestrahlung kann in dem zweiten Betriebszustand dann reflektiert bzw. absorbiert werden.

Das Fenster kann in dem Türelement oder einer Wand aufgenommen sein, wobei das Fenster Außenscheiben und zumindest eine zwischenliegende Innenscheibe aufweisen kann. Das Fenster kann ein sogenanntes Isolierglasfenster sein bzw. ein Mehrscheiben-Isolierglas aufweisen. Weiter können Glasscheiben des Fensters auch mit einer Beschichtung versehen sein. Vorzugsweise ist die Abschirmvorrichtung an einer Außenscheibe des Fensters angebracht. Die Abschirmvorrichtung kann dabei zwischen der einen Außenscheibe und der Innenscheibe angeordnet sein. Folglich ist die Abschirmvorrichtung dann innerhalb des Fensters angeordnet.

Die Steuervorrichtung kann eine Bedieneinrichtung mit einer Anzeige und Bedienelementen, sowie eine Messvorrichtung zur Bestimmung einer Temperatur und/oder Luftfeuchte aufweisen. Die Bedieneinrichtung kann zur manuellen Bedienung der Steuervorrichtung eingerichtet sein. Über die Anzeige der Bedieneinrichtung können beispielsweise aktuelle Messwerte oder ein jeweils ausgewählter Betriebszustand angezeigt werden. Die Bedienelemente können durch Schalter oder eine berührungssensitive Anzeige ausgebildet sein. Mit der Messvorrichtung kann eine Temperatur und/oder Luftfeuchte innerhalb des Prüfraums oder unmittelbar an dem Prüfgut gemessen werden.

Die Prüfkammer kann eine Befeuchtervorrichtung zur Einstellung einer Luftfeuchtigkeit in einem Luftfeuchtebereich von 10 % bis 98 % relativer Luftfeuchte innerhalb des Prüfraums aufweisen. Die Befeuchtervorrichtung kann dann vorteilhaft zusammen mit der Temperiervorrichtung zur Ausbildung bestimmter Klimabedingungen in dem Prüfraum genutzt werden.

Die Kühleinrichtung kann mit einem Kühlkreislauf mit einem Kältemittel, einem Wärmeübertrager, der in dem Prüfraum angeordnet ist, einem Verdichter, einem Kondensator und einem Expansionsorgan ausgebildet sein. Folglich kann die Kühleinrichtung mit einer Kompressionskältemaschine ausgebildet sein.

Bei dem erfindungsgemäßen Verfahren zur Steuerung einer Prüfkammer zur Konditionierung von Luft, insbesondere einer Klimakammer oder dergleichen, wird in einem gegenüber einer Umgebung durch Wände begrenzten, mit einem Türelement verschließbaren und temperaturisolierten Prüfraum der Prüfkammer Prüfgut angeordnet, wobei eine Steuervorrichtung der Prüfkammer eine Funktion der Prüfkammer steuert, wobei eine Temperiervorrichtung der Prüfkammer den Prüfraum temperiert, wobei mittels einer Kühleinrichutng und einer Heizeinrichutng der Temperiervorrichtung eine Tempeatur in einem Temperaturbereich von -40 °C bis +180 °C, vorzugsweise -80 °C bis +180 °C, innerhalb des Prüfraums ausgebildet wird, wobei der Prüfraum zumindest ein Fenster aufweist, wobei die Steuervorrichtung eine Abschirmvorrichtung des Fensters entweder in einen ersten Betriebszustand oder in einen zweiten Betriebszustand bringt, wobei mittels der Abschirmvorrichtung ein Transmissionsgrad des Fensters in dem ersten Betriebszustand kleiner und/oder ein Absorptionsgrad des Fensters größer als in dem zweiten Betriebszustand ausgebildet wird. Zu den Vorteilen des erfindungsgemäßen Verfahrens wird auf die Vorteilsbeschreibung der erfindungsgemäßen Vorrichtung verwiesen.

Mittels einer Bedieneinrichtung der Steuervorrichtung kann ein Wechsel zwischen dem ersten Betriebszustand und dem zweiten Betriebszustand erfolgen. Beispielsweise ist es dann einer Bedienperson möglich, durch Betätigung eines Bedienelements, den Wechsel zwischen den jeweiligen Betriebszuständen zu vollziehen. Die Bedienperson kann dann während des Prüfablaufs, beispielsweise zu Kontrollzwecken, die Abschirmvorrichtung bzw. deren abschirmende Wirkung deaktivieren. Nach der Kontrolle kann dann wieder die abschirmende Wirkung der Abschirmvorrichtung aktiviert werden, sodass der Prüfablauf weitestgehend störungsfrei bzw. von Strahlung aus einer Umgebung unbeeinflusst, fortgeführt werden kann.

Der Wechsel zwischen dem ersten Betriebszustand und dem zweiten Betriebszustand und/oder ein Entriegeln oder Verriegeln des Türelements kann mittels der Steuervorrichtung nach einer Identifikation eines Benutzers mittels der Bedieneinrichtung erfolgen. Durch die Identifikation des Benutzers mittels der Bedieneinrichtung wird sichergestellt, dass ausschließlich befugte Benutzer das Türelement öffnen oder verriegeln sowie zwischen dem ersten Betriebszustand und dem zweiten Betriebszustand wechseln können. Die Steuervorrichtung kann auch so eingerichtet sein, dass ausschließlich befugte Benutzer Änderungen an der Steuervorrichtung vornehmen können. So kann weitestgehend sichergestellt werden, dass ausschließlich befugte Benutzer in einen Prüfablauf eingreifen können. Die Funktion der Identifikation kann jedoch auch zur Protokollierung benutzt werden, d.h. es kann mittels der Steuervorrichtung aufgezeichnet werden, welcher Benutzer in den Prüfablauf eingegriffen hat.

Der erste Betriebszustand kann als ein Grundzustand ausgewählt sein, wobei auf eine Anforderung ein Wechsel in den zweiten Betriebszustand erfolgen kann. Die Steuervorrichtung kann demnach so eingerichtet sein, dass die Abschirmvorrichtung zunächst immer in dem ersten Betriebszustand gehalten wird. Auf eine Anforderung, beispielsweise über eine Bedieneinrichtung der Steuervorrichtung, kann dann ein Wechsel in den zweiten Betriebszustand erfolgen. Somit ist sichergestellt, dass in dem Grundzustand das Fenster bzw. der Prüfraum soweit als möglich mit der Abschirmvorrichtung abgeschirmt ist. Eine versehentliche Durchführung eines Prüfablaufs während des zweiten Betriebszustands kann so vermieden werden.

Die Steuervorrichtung kann nach einer in der Steuervorrichtung gespeicherten Zeitdauer von dem zweiten Betriebszustand in den ersten Betriebszustand wechseln. Die Zeitdauer kann durch eine Zeitvorgabe in der Steuervorrichtung oder in Art einer Zeitschaltuhr vorgegeben oder eingestellt sein. So ist dann möglich, dass, wenn ein Wechsel in den zweiten Betriebszustand erfolgt ist, eine Zeitdauer des zweiten Betriebszustands von der Steuervorrichtung erfasst und nach Ablauf der gespeicherten Zeitdauer bzw. Zeitvorgabe der Wechsel in den ersten Betriebszustand erfolgt. Die Zeitdauer kann beispielsweise 30 Sekunden, eine Minute, zwei Minuten, fünf Minuten oder dergleichen sein. Somit kann sichergestellt werden, dass sich die Abschirmvorrichtung nicht zu lange in dem zweiten Betriebszustand befindet oder versehentlich von einer Bedienperson eine Umschaltung bzw. ein Wechsel von dem zweiten Betriebszustand in den ersten Betriebszustand versäumt wird.

Die Steuervorrichtung kann ausschließlich während einer Zeitdauer des zweiten Betriebszustands eine Prüfraumbeleuchtung der Prüfkammer einschalten. Wenn der zweite Betriebszustand zur Kontrolle des Prüfablaufs genutzt wird, kann es vorteilhaft sein, dass während der Kontrolle der Prüfraum beleuchtet ist. Da eine Prüfraumbeleuchtung in jedem Fall Strahlungsenergie emittiert, die einen Prüfablauf beeinflussen könnte, kann die Prüfraumbeleuchtung dann zusammen mit dem zweiten Betriebszustand genutzt bzw. geschaltet werden. Die Prüfkammer wird dadurch noch einfacher bedienbar.

Die Steuervorrichtung kann ausschließlich während einer Zeitdauer des zweiten Betriebszustands eine Fensterrahmenheizeinrichtung des Fensters und/oder einer Fensterflächenheizeinrichtung einer Fensterfläche des Fensters einschalten. Insbesondere, wenn es zu einer Betauung einer Fensterfläche im Rahmen eines Prüfablaufs kommt, ist es vorteilhaft, wenn mittels der Fensterrahmenheizeinrichtung und/oder der Fensterflächenheizeinrichtung die Fensterfläche enttaut wird, um eine ungehinderte Kontrolle des Prüfablaufs vornehmen zu können. Da auch hier eine Enttauung nur dann erforderlich ist, wenn der zweite Betriebszustand eingeschaltet ist, kann auch diese Funktion zusammen mit dem zweiten Betriebszustand geschaltet werden. Da insbesondere eine Fensterrahmenheizeinrichtung und eine Fensterflächenheizeinrichtung Wärmeenergie bzw. Wärmestrahlung emittiert, wird ein Prüfablauf noch genauer durchführbar, wenn diese Funktionen bzw. Einrichtungen während des Prüfablaufs nur dann genutzt werden, wenn es tatsächlich erforderlich ist.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die **Figur** näher erläutert.

Die **Figur** zeigt eine perspektivische Darstellung einer Prüfkammer 10 mit einer hier nicht näher dargestellten Temperiervorrichtung zur Temperieriung eines Prüfraums 11 der Prüfkammer 10. Der Prüfraum 11 ist durch Wände 12 gegenüber einer Umgebung 13 begrenzt und mit einem Türelement 14 verschlossen. In dem Türelement 14 ist ein Fenster 15 des Prüfraums 11 angeordnet. Das Fenster 15 ist mit einer Abschirmvorrichtung ausgebildet, die hier nicht näher ersichtlich ist. Eine ebenfalls nicht dargestellte Steuervorrichtung der Prüfkammer 10 ist dazu eingerichtet, die Abschirmvorrichtung entweder in einen ersten Betriebszustand oder in einen zweiten Betriebszustand zu bringen, wobei mittels der Abschirmvorrichtung ein Transmissionsgrad des Fensters 15 in dem ersten Betriebszustand kleiner und/oder ein Absorptionsgrad des Fensters 15 größer als in dem zweiten Betriebszustand ausbildbar ist. Folglich kann in dem ersten Betriebszustand mittels der Abschirmvorrichtung Strahlungsenergie, die durch das Fenster 15 von der Umgebung 13 in den Prüfraum 11 eindringen könnte, abgeschirmt werden. Umgekehrt kann auch Strahlungsenergie, die von dem Prüfraum 11 durch das Fenster 15 in die Umgebung 13 gelangen könnte, abgeschirmt werden. In dem zweiten Betriebszustand ist eine abschirmende Wirkung der Abschirmvorrichtung soweit deaktiviert, dass diese Strahlungsenergie zumindest teilweise das Fenster 15 passieren bzw. durchdringen kann. Eine Kontrolle eines Prüfablaufs in dem Prüfraum 11 durch eine Bedienperson ist dann möglich.

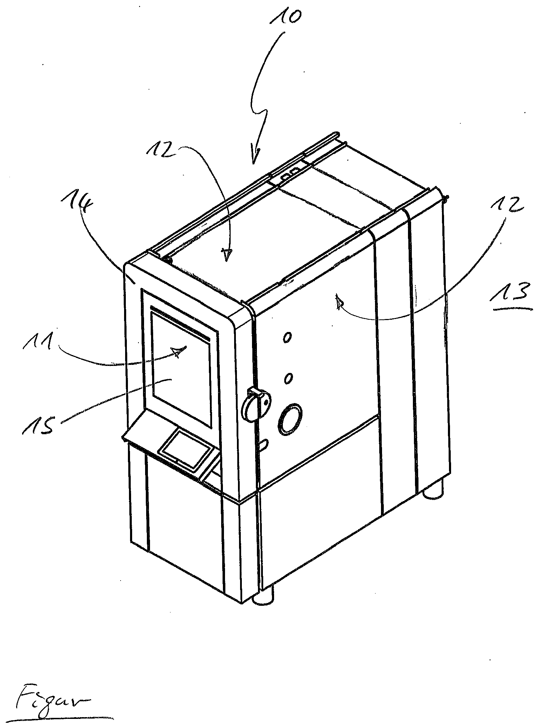

## Patentansprüche

1. Prüfkammer (10) zur Konditionierung von Luft, insbesondere Klimakammer oder dergleichen, umfassend einen gegenüber einer Umgebung (13)durch Wände (12) begrenzten, mit einem Türelement (14) verschließbaren und temperaturisolierten Prüfraum (11) zur Aufnahme von Prüfgut, eine Steuervorrichtung zur Steuerung einer Funktion der Prüfkammer, und eine Temperiervorrichtung zur Temperierung des Prüfraums, wobei die Temperiervorrichtung eine Kühleinrichtung und eine Heizeinrichtung aufweist, wobei mittels der Temperiervorrichtung eine Temperatur in einem Temperaturbereich von -40 °C bis +180 °C, vorzugsweise -80 °C bis +180 °C, innerhalb des Prüfraums ausbildbar ist, wobei der Prüfraum zumindest ein Fenster (15) aufweist,
**dadurch gekennzeichnet,**
**dass** das Fenster mit einer Abschirmvorrichtung der Prüfkammer ausgebildet ist, wobei die Steuervorrichtung dazu eingerichtet ist, die Abschirmvorrichtung entweder in einen ersten Betriebszustand oder in einen zweiten Betriebszustand zu bringen, wobei mittels der Abschirmvorrichtung ein Transmissionsgrad des Fensters in dem ersten Betriebszustand kleiner und/oder ein Absorptionsgrad des Fensters größer als in dem zweiten Betriebszustand ausbildbar ist.

2. Prüfkammer nach Anspruch 1,
**dadurch gekennzeichnet,**
**dass** mittels der Abschirmvorrichtung in dem ersten Betriebszustand elektromagnetische Strahlung, bevorzugt Wärmestrahlung, UV-Strahlung, sichtbares Licht und/oder IR-Strahlung, abschirmbar ist.

3. Prüfkammer nach Anspruch 1 oder 2,
**dadurch gekennzeichnet,**
**dass** das Fenster (15) in dem ersten Betriebszustand intransparent und in dem zweiten Betriebszustand transparent ist.

4. Prüfkammer nach einem der vorangehenden Ansprüche,
**dadurch gekennzeichnet,**
**dass** die Abschirmvorrichtung eine Abschirmeinrichtung aufweist, wobei die Abschirmeinrichtung aus einem Glas oder einer Folie mit thermochromen, elektrochromen und/oder photochromen Eigenschaften ausgebildet ist, wobei die Abschirmeinrichtung eine Fensterfläche des Fensters (15) überdeckt.

5. Prüfkammer nach Anspruch 4,
**dadurch gekennzeichnet,**
**dass** das Glas oder die Folie mit Flüssigkristalltechnik ausgebildet ist und elektrisch in den ersten Betriebszustand oder in den zweiten Betriebszustand schaltbar ist.

6. Prüfkammer nach einem der vorangehenden Ansprüche,
**dadurch gekennzeichnet,**
**dass** das Fenster (15) in dem Türelement (14) oder einer Wand (12) aufgenommenen ist, wobei das Fenster Außenscheiben und zumindest eine zwischenliegende Innenscheibe aufweist.

7. Prüfkammer nach einem der vorangehenden Ansprüche,
**dadurch gekennzeichnet,**
**dass** die Steuervorrichtung eine Bedieneinrichtung mit einer Anzeige und Bedienelementen, sowie eine Messvorrichtung zur Bestimmung einer Temperatur und/oder Luftfeuchte aufweist.

8. Prüfkammer nach einem der vorangehenden Ansprüche,
**dadurch gekennzeichnet,**
**dass** die Prüfkammer (10) eine Befeuchtervorrichtung zur Einstellung einer Luftfeuchtigkeit in einem Luftfeuchtebereich von 10 % bis 98 % relative Luftfeuchte innerhalb des Prüfraums aufweist.

9. Prüfkammer nach einem der vorangehenden Ansprüche,
**dadurch gekennzeichnet,**
**dass** die Kühleinrichtung mit einem Kühlkreislauf mit einem Kältemittel, einem Wärmeübertrager, der in dem Prüfraum (11) angeordnet ist, einem Verdichter, einem Kondensator und einem Expansionsorgan ausgebildet ist.

10. Verfahren zur Steuerung einer Prüfkammer (10) zur Konditionierung von Luft, insbesondere einer Klimakammer oder dergleichen, wobei in einem gegenüber einer Umgebung (13) durch Wände begrenzten, mit einem Türelement (14) verschließbaren und temperaturisolierten Prüfraum (11) der Prüfkammer Prüfgut angeordnet wird, wobei eine Steuervorrichtung der Prüfkammer eine Funktion der Prüfkammer steuert, wobei eine Temperiervorrichtung der Prüfkammer den Prüfraum temperiert, wobei mittels einer Kühleinrichtung und einer Heizeinrichtung der Temperiervorrichtung eine Temperatur in einem Temperaturbereich von -40 °C bis +180 °C, vorzugsweise -80 °C bis +180 °C, innerhalb des Prüfraums ausgebildet wird, wobei der Prüfraum zumindest ein Fenster (15) aufweist,
**dadurch gekennzeichnet,**
**dass** die Steuervorrichtung eine Abschirmvorrichtung des Fensters (15) entweder in einen ersten Betriebszustand oder in einen zweiten Betriebszustand bringt, wobei mittels der Abschirmvorrichtung ein Transmissionsgrad des Fensters in dem ersten Betriebszustand kleiner und/oder ein Absorptionsgrad des Fensters größer als in dem zweiten Betriebszustand ausgebildet wird.

11. Verfahren nach Anspruch 10,
**dadurch gekennzeichnet,**
**dass** mittels einer Bedieneinrichtung der Steuervorrichtung ein Wechsel zwischen dem ersten Betriebszustand und dem zweiten Betriebszustand erfolgt.

12. Verfahren nach Anspruch 10 oder 11,
**dadurch gekennzeichnet,**
**dass** der Wechsel zwischen dem ersten Betriebszustand und dem zweiten Betriebszustand und/oder ein Entriegeln oder Verriegeln des Türelements (14) mittels der Steuervorrichtung nach einer Identifikation eines Benutzers mittels der Bedieneinrichtung erfolgt.

13. Verfahren nach einem der Ansprüche 10 bis 12,
**dadurch gekennzeichnet,**
**dass** der erste Betriebszustand als ein Grundzustand ausgewählt ist, und auf Anforderung ein Wechsel in den zweiten Betriebszustand erfolgt.

14. Verfahren nach einem der Ansprüche 10 bis 13,
**dadurch gekennzeichnet,**
**dass** die Steuervorrichtung nach einer in der Steuervorrichtung gespeicherten Zeitdauer von dem zweiten Betriebszustand in den ersten Betriebszustand wechselt.

15. Verfahren nach einem der Ansprüche 10 bis 14,
**dadurch gekennzeichnet,**
**dass** die Steuervorrichtung ausschließlich während einer Zeitdauer des zweiten Betriebszustands eine Prüfraumbeleuchtung der Prüfkammer (10) einschaltet.

16. Verfahren nach einem der Ansprüche 10 bis 15,
**dadurch gekennzeichnet,**
**dass** die Steuervorrichtung ausschließlich während einer Zeitdauer des zweiten Betriebszustands eine Fensterrahmenheizeinrichtung des Fensters (15) und/oder eine Fensterflächenheizeinrichtung einer Fensterfläche des Fensters einschaltet.
